# FASCICULE DE BREVET EUROPEEN

(11) **EP 0 808 008 B1**
(45) Date de publication et mention de la délivrance du brevet: **13.08.2003**
(21) Numéro de dépôt: 97401010.0
(22) Date de dépôt: 05.05.1997
(51) Int. Cl.: H02G 15/013, H02G 15/113

(54) **Boîtier étanche de raccordement de câbles**
Abgedichtetes Kabelverbindungsgehäuse
Sealed cable junction box

(30) Priorité: 15.05.1996 FR 9606076
(43) Date de publication de la demande: 19.11.1997
(73) Titulaire: ALCATEL CABLE INTERFACE, 08330 Vrigne aux Bois (FR)
(72) Inventeur: Milanowski, Michel, 60540 Anserville (FR); Vincent, Alain, 77230 Juilly (FR)
(74) Mandataire: Feray, Valérie

(56) Documents cités:
- EP-A- 0 257 896
- WO-A-95/02267
- DE-A- 3 512 165
- GB-A- 2 261 960
- US-A- 3 844 573

## Description

La présente invention porte sur un boîtier étanche de raccordement de câbles, comportant un corps, un couvercle de fermeture du corps, des accès de câbles définis entre le corps et le couvercle fermé, un joint d'étanchéité de boîtier entre le corps et le couvercle fermé et un joint d'étanchéité de câbles dans chaque accès.

Le document EP-A-0 637 767 décrit un tel boîtier de raccordement, dont le couvercle est d'une part articulé d'autre part verrouillé sur les deux grandes parois latérales du corps. Ce boîtier a des accès individuels pour les câbles sur les petites parois latérales du corps. Ces accès sont des cavités ouvertes en long. Chaque cavité reçoit un joint d'étanchéité de câble dans sa partie située vers l'intérieur du corps et assure le maintien du câble dans sa partie terminale située vers l'extérieur du corps, le joint d'étanchéité de câble étant réalisé en deux parties pour sa mise en place. Un joint d'étanchéité de boîtier est prévu sur chacun des bords des deux grandes parois latérales du corps. Ces joints d'étanchéité de câble et de boîtier sont déformables. Ils sont comprimés par la pression exercée par le couvercle fermé et verrouillés sur le corps. Ils ne sont cependant pas continus sur toute la périphérie du corps, ce qui risque de poser des problèmes d'étanchéité satisfaisante du boîtier.

Le document WO-A-9 502 267 décrit un boîtier étanche de raccordement de câbles, dont le couvercle est également articulé et verrouillé sur les deux grandes parois latérales du corps. Ce boîtier présente des accès individuels pour les câbles, sur l'une des petites parois latérales du corps. Ces accès sont des cavités ouvertes longitudinalement, sauf sur leur partie terminale située vers l'intérieur du corps où une cloison intérieure en forme de pont relie les bords des deux grandes parois latérales du corps, par dessus les accès et tout en laissant ainsi ces accès déboucher dans le corps. Ce boîtier est muni d'un joint d'étanchéité continu et sensiblement périphérique sur le corps, qui est monté sur les bords des deux grandes parois du corps, de sa petite paroi latérale sans accès de câble et de sa cloison intérieure opposée à cette petite paroi latérale sans accès. Un rebord continu est prévu sur la périphérie du couvercle ou des rebords séparés sont prévus sur sa périphérie, pour venir à l'extérieur du joint d'étanchéité quant le couvercle est fermé et ainsi former un obstacle s'opposant à la pénétration d'humidité ou autre dans le boîtier fermé. Une telle étanchéité entre le corps et le couvercle est totalement indépendante de l'étanchéité qui peut être assurée pour chaque câble dans son accès. Ceci fait que l'étanchéité globale du boîtier risque de ne pas être satisfaisante.

Le document selon l'art antérieur GB-A- 2 261 960 décrit un boîtier pour raccordement de câble optique dont le corps 16 est pourvu d'accès pour les câbles et est fermé par un couvercle 17. Un joint périphérique continu 21 est enserré entre des surfaces de connexion du corps et du couvercle dans une rainure 20 agencée dans le couvercle. Un joint élastiquement déformable 23 est monté dans chaque accès et prévu pour se conformer à celui-ci en assurant l'étanchéité du câble. Il est pourvu d'un passage fendu pour recevoir le câble. Ce joint d'étanchéité des câbles 23 a une dureté inférieure à celle du joint périphérique continu 21 et est comprimé par celui-ci quand le couvercle est fermé.

La présente invention a pour but de réaliser un boîtier étanche de raccordement de câbles dont l'étanchéité est rendue continue sur sa périphérie en englobant ses accès de câbles.

Elle a pour objet un boîtier étanche de raccordement de câbles, comportant un corps, un couvercle de fermeture du corps, des accès de câbles entre le corps et le couvercle, un premier joint flexible et déformable d'étanchéité des câbles dans chaque accès, une rainure prévue sur les bords périphériques du corps ou du couvercle et divisée en tronçons par lesdits accès, et un deuxième joint flexible et déformable d'étanchéité de boîtier, monté dans ladite rainure et formé en correspondance de segments indépendants chacun reçu dans l'un des tronçons et saillant sur ses bords latéraux, caractérisé en ce que chaque segment dudit deuxième joint d'étanchéité de boîtier a une partie terminale encastrée dans le premier joint d'étanchéité des câbles en place dans l'accès à ce niveau, et en ce que ledit premier joint présente une dureté inférieure à celle dudit deuxième joint, pour être comprimé sur la partie terminale encastrée de ce segment en même temps que dans l'accès et sur les câbles et réaliser une continuité d'étanchéité avec cette partie terminale encastrée de ce segment.

Chaque tronçon de ladite rainure présente une portion terminale parallèle à une direction axiale de l'accès à ce niveau et aux câbles dans cet accès et est ouverte directement dans l'accès.
- les portions terminales de chaque tronçon de ladite rainure ont leurs extrémités débouchant dans les deux accès de part et d'autre de ce tronçon, et le segment dudit deuxième joint dans ce tronçon est saillant sur les extrémités du tronçon dans ces deux accès.

Ce boîtier présente avantageusement en outre au moins l'une des caractéristiques additionnelles suivantes :
- les portions terminales de chaque tronçon de ladite rainure sont ouvertes en long dans les deux accès de part et d'autre de ce tronçon et présentent chacune un bossage saillant dans la rainure et vers l'accès à ce niveau.
- ledit premier joint d'étanchéité des câbles dans chaque accès présente une forme de galette, ayant des dimensions périphériques adaptées aux dimensions périphériques intérieures dudit accès et une épaisseur réduite par rapport à la dimension axiale dudit accès et présentant des passages individuels pour un nombre maximal limité de câbles, est associé à des moyens de compression et présente un évidement réalisé sur au moins une face de ce premier joint tournée vers l'intérieur dudit boîtier et à travers au moins une partie de son épaisseur, pour l'encastrement de l'une des parties terminales de l'un des segments dudit deuxième joint.
- ledit premier joint des câbles a une dureté choisie au plus de l'ordre de 5 shores et ledit deuxième joint d'étanchéité de boîtier une dureté comprise entre 20 et 40 shores.

Les caractéristiques et avantages de la présente invention ressortiront de la description détaillée faite ci-après en regard des dessins ci-annexés. Dans ces dessins :
- La figure 1 est une vue schématique en perspective et arrachement partiel d'un boîtier de raccordement de câbles, équipé selon l'invention,
- la figure 1A est une vue partielle à échelle agrandie donnée en regard de la figure 1,
- La figure 2 est une vue en coupe d'un dispositif d'étanchéité de câbles dans un accès du boîtier,
- La figure 3 est une vue latérale du dispositif selon la figure 2,
- les figures 4 et 5 sont des vues de face et en coupe d'un joint du dispositif selon les figures 2 et 3,
- les figures 6 et 7 sont des vues en élévation et en coupe d'une bague associée audit joint,
- les figures 8, 9 et 10 sont des vues partielles de variantes de réalisation qui sont données par rapport à la figure 1A,
- les figures 11 et 12 sont deux vues en coupe et latérale d'une variante du dispositif d'étanchéité de câbles, en particulier pour correspondant l'une des variantes de réalisation selon les figures 8 à 10 du boîtier.
- les figures 13, 14 et 15 sont des vues partielles de face de variantes de réalisation du joint déformable du dispositif d'étanchéité, qui sont données par rapport à la figure 4 et en correspondance avec les variantes de réalisation des figures 8, 9 et 10.

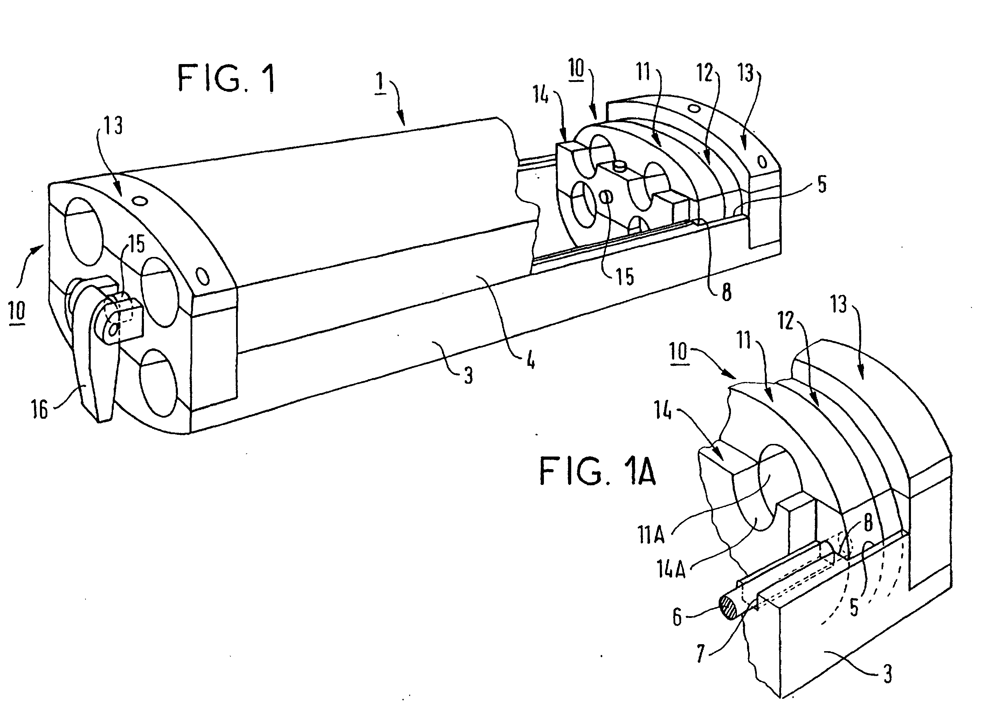

Dans la figure 1, on a illustré un boîtier 1 de raccordement de câbles, dont les câbles ne sont pas illustrés dans cette figure et sont désignés ci-après sous la référence 2. Ce boîtier comporte un corps 3 et un couvercle 4 de fermeture du corps et des accès latéraux opposés 5, chacun pour plusieurs câbles. Chaque accès est avantageusement prévu pour un nombre maximal limité de câbles de diamètre compris dans une large gamme possible.

Dans l'exemple illustré, le boîtier est tubulaire et est extérieurement comme intérieurement de section circulaire tronquée par deux méplats opposés formant les deux grandes parois latérales du boîtier. Il comporte un seul accès à chacune de ses extrémités, qui est prévu pour quatre câbles possibles dans chaque accès et est défini par les parties terminales en vis-à-vis du corps et du couvercle, chaque accès étant rendu circulaire sauf dans sa partie terminale située vers l'intérieur du boîtier et étant tronqué dans sa partie terminale du côté extérieur. En variante, le boîtier peut comporter plusieurs accès à chacune de ses extrémités, qui sont définis entre les petites parois frontales du corps et du boîtier. En variante aussi chaque accès peut être prévu pour un nombre différent de câbles, par exemple pour deux câbles, les dimensions et la forme du boîtier étant définies en fonction du nombre de câbles qu'il peut recevoir.

Ce boîtier 1 est équipé d'une part de deux joints 6 de boîtier, sous forme de deux segments identiques, qui sont montés sur le bord des deux grandes parois latérales du corps 3 pour être comprimés entre le corps et le couvercle, et d'autre part un dispositif d'étanchéité 10 des câbles reçus dans chaque accès, qui est monté avec les câbles dans l'accès. Ces deux segments ou joints 6 et chaque dispositif d'étanchéité 10 sont en outre conçus pour réaliser ensemble une continuité d'étanchéité à leur jonction.

L'un des segments ou joints 6 et son montage sont décrits en se référant à cette figure 1 et plus particulièrement à la figure 1A.

Ce joint 6 est logé dans une rainure 7 qui est prévue sur le bord de l'une des grandes parois latérales du corps et qui débouche dans l'une des parties latérales de l'accès 5, à cette extrémité du boîtier. Cet accès présente un épaulement 8 au niveau du bout de cette rainure. Le joint 6 est saillant au dessus de la rainure. Il a également sa partie terminale qui est prévue saillante sur le bout de la rainure et qui rentre dans le dispositif d'étanchéité 10. Ce joint 6 est de section circulaire dans cette réalisation, sa section étant pleine ou plus avantageusement creuse axialement. Il est déformable mais présente de préférence une dureté relativement importante comprise entre 20 et 40 shores.

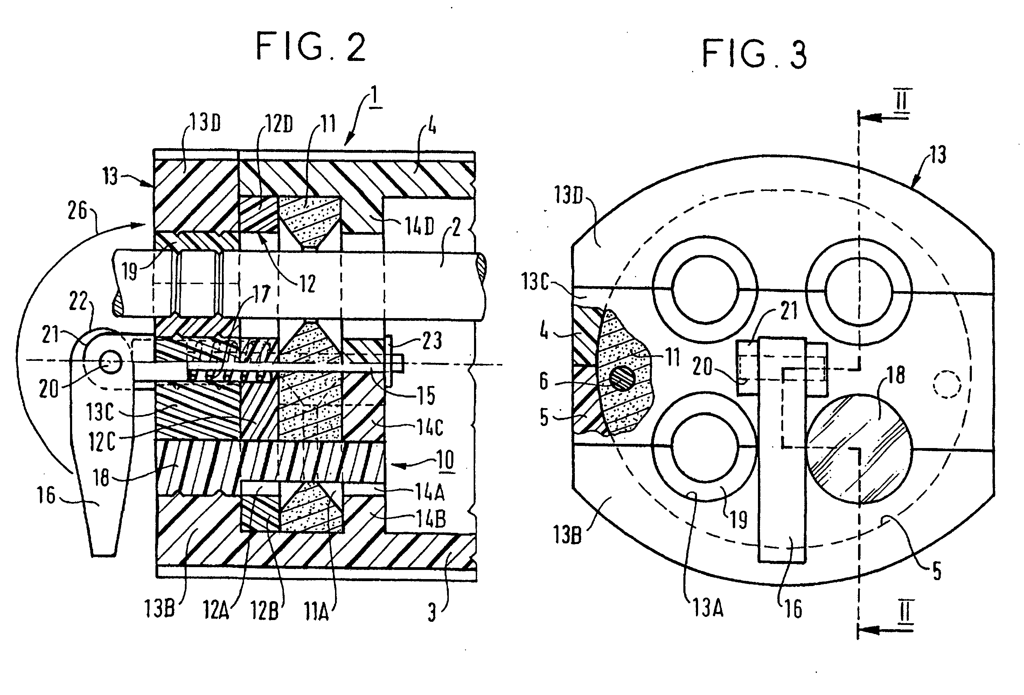

Le dispositif d'étanchéité des câbles dans leur accès est décrit en se référant aux figures 1 et 1A et plus particulièrement aux figures 2 et 3.

Le dispositif 10 comporte un joint souple et déformable 11, un disque rigide et mobile de compression 12, une première butée rigide et fixe 13 et une deuxième butée rigide et fixe 14, montés dans l'accès transversalement à la direction axiale de celui-ci. Le joint 11 est monté entre le disque de compression et la deuxième butée fixe. La première butée fixe 13 est montée dans la partie terminale de l'accès débouchant sur l'extérieur du boîtier. La deuxième butée fixe 14 est dans la partie terminale opposée de l'accès, située vers l'intérieur du corps.

Le joint 11 a une forme de galette, qui est d'épaisseur réduite par rapport à la longueur axiale de l'accès et est reçue avec le disque de compression 12 dans la partie non terminale de section circulaire de l'accès.

Ce dispositif comporte également une tige 15 axiale et coulissante dans l'accès, qui traverse axialement les butées fixes ainsi que le disque de compression et le joint entre elles, et un levier extérieur associé 16 d'actionnement du disque de compression 12, via cette tige 15.

La tige coulissante est couplée au disque de compression par un ressort 17, pour venir comprimer le joint 11 quand le levier est actionné. En variante, elle peut être directement couplée au disque de compression en lui étant solidaire et ne s'étendant pas au-delà du disque vers l'intérieur du boitier.

Le joint, le disque de compression 12, la première et la deuxième butée fixe 13, 14 sont munis de passages individuels pour les câbles pouvant être reçus dans l'accès. Ces passages *sont* référencés 11A, 12A, 13A, 14A selon la pièce considérée. Ils sont alignés d'une pièce à l'autre quand les pièces sont en place pour définir alors autant de séries de passages pour les câbles. Les passages 12A, 13A, 14A sont prévus de diamètre légèrement supérieur au diamètre maximal des câbles pouvant être reçus dans l'accès. Les passages 11A sont par contre de diamètre sensiblement inférieur au diamètre maximal des câbles. Ces passages 11A sont de forme biconique, dont les deux cônes sont accolés par leur petite base commune.

Le disque de compression 12, la première butée fixe 13 et la deuxième butée fixe 14 sont formés chacun en plusieurs parties assemblées les unes aux autres, dans cet exemple en trois parties qui sont notées 12B, 12C et 12D, 13B, 13C et 13D, 14B, 14C et 14D selon la pièce concernée. La partie notée 13B de la première butée fixe appartient au corps et est réalisée par un épaulement terminal sur celui-ci. Les parties notées 14B et 14D de la deuxième butée fixe 14 appartiennent au corps et au couvercle, respectivement. Les passages dans les différentes parties de ces pièces 12 à 14 sont prévus semi-circulaires en étant ainsi ouverts sur les bords d'assemblage des parties de chacune des pièces, avant assemblage de ces parties.

Le joint 11 peut être pareillement réalisé en plusieurs parties assemblables pour que ses passages soient ouverts avant la mise en place des différentes parties de ce joint dans l'accès. Il est avantageusement d'un seul tenant, avec chacun de ses passages ouvert simplement par une fente allant du passage à la périphérie de ce joint, cette fente étant de préférence réalisée lors de la mise en place du câble dans le passage et n'étant pas réalisée si le passage ne reçoit pas de câble.

Un bouchon 18 est inséré dans chaque série de passages alignés les uns avec les autres, qui ne reçoit pas de câble.

Ainsi que représenté dans la figure 2, deux demi-cales 19 sont de préférence montées dans chacun des passages 13A de la première butée fixe avec le câble, dès que ce câble est de diamètre très inférieur au diamètre de ce passage. Ces deux cales sont identiques, amovibles dans chaque moitié de passage 13A et adaptées extérieurement au passage et intérieurement au câble.

Elles sont rainurées extérieurement et nervurées intérieurement, tandis que le passage 13A est lui-même nervuré en correspondance, pour éviter leur glissement dans ce passage et assurer une bonne rétention du câble.

Avantageusement aussi, la partie centrale notée 13C de cette première butée assure le bridage du câble, qui est reçu dans l'un des deux passages définis entre elle et la partie inférieure 13B solidaire corps, tandis que la troisième partie 13D de cette même première butée assure le bridage des deux câbles reçus dans les deux passages définis entre cette partie 13D et la partie centrale 13C.

La description du dispositif d'étanchéité selon les figures 2 et 3 est complétée, en ce qui concerne l'actionnement de la tige coulissante 15 par le levier 16.

Dans les figures 2 et 3, la tige coulissante 15 est actionnée en mode "poussé" vers l'intérieur du boîtier par actionnement du levier 16.

La première partie terminale de la tige 15, qui est saillante à l'extérieur de l'accès et du boîtier, est en appui sur une partie terminale du levier 16. Cette partie terminale du levier 16 est couplée par un axe d'articulation 20 à la première butée 13, sur la partie centrale 13C de cette première butée qui présente à cet effet deux pattes 21 de rétention entre elles du levier. La partie périphérique 22 de cette partie terminale du levier constitue une came d'actionnement de la tige. Cette came est semi-circulaire, mais l'axe d'articulation 20 est décalé par rapport au centre de la came pour l'obtention de l'effet recherché de came. Cette première partie terminale de la tige est prévue de section plus importante que celle de sa partie intermédiaire et de sa deuxième partie terminale, l'épaulement de transition des sections étant relativement proche de l'extrémité de la première partie terminale et se situant dans la première butée fixe 13.

Le ressort 17 est monté sur la partie intermédiaire de la tige 15, entre l'épaulement à la transition des sections de cette tige et un épaulement prévu dans le perçage axial du disque de compression 12. Il se loge principalement dans le perçage axial de la butée fixe, en étant prisonnier dans celui-ci et par ailleurs reçu et bloqué dans le disque de compression.

La deuxième extrémité de la tige 15 porte une rondelle 23, qui est reçue en appui contre la deuxième butée fixe 14 quand le levier est en position de repos, illustrée dans la figure 2, et que le ressort est alors peu comprimé et le joint 11 pas comprimé.

Lors de l'actionnement du levier 16 autour de l'axe d'articulation 20, selon la flèche 26, la came 22 est entraînée sur l'extrémité de la tige 15 pour la pousser vers l'intérieur de l'accès et du boîtier. Simultanément le ressort est plus fortement comprimé et pousse le disque de compression pour comprimer fortement le joint et le faire fluer dans les espaces libres autour des câbles en place et autour du bouchon en place. L'action conjuguée de poussée de la tige et de réaction du ressort comprimé assure un tarage de la force exercée par ce ressort sur le disque de compression, le ressort jouant ainsi le rôle d'un système de débrayage au cours de l'entraînement du disque de compression, en particulier lors de gros câbles reçus à travers le joint.

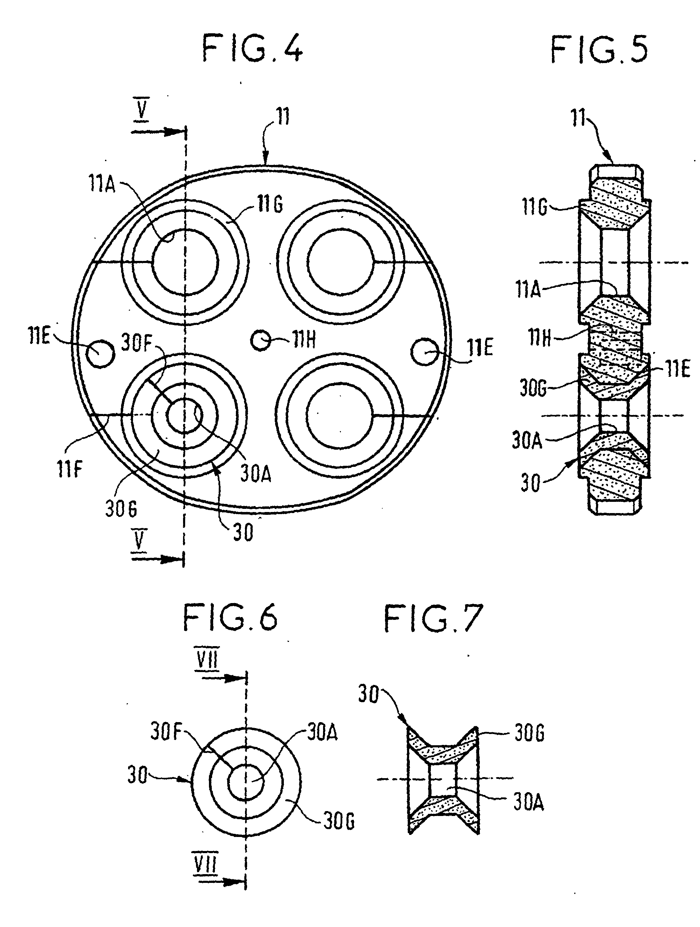

En se référant aux figures 4 à 7, on voit que le joint 11 comporte des fentes 11F qui sont réalisées pour l'ouverture de chacun de ses passages 11A sur la périphérie du joint, sauf si le passage ne doit pas recevoir de câble mais sera fermé par le bouchon comme c'est le cas dans les figures 2 et 3. On voit aussi que ses passages 11A ont leur bord évasé sur chacune des faces du joint et entouré d'une nervure périphérique 11G sur chacune des deux faces du joint. Le perçage axial du joint pour la tige coulissante est un trou 11H de petit diamètre.

Une bague 30 de rattrapage de diamètre est montée dans l'un des passages 11A, dès lors que le câble devant être reçu dans ce passage, est de diamètre très inférieur à celui du passage. Cette bague 30 est en matériau déformable, de même nature ou de nature analogue à celle du joint. Elle a une forme de diabolo, qui est adaptée à la forme du passage et vient jusqu'à la nervure périphérique sur l'une et l'autre des faces du joint. Cette bague présente une fente 30F réalisée pour la mise en place du câble dans le passage équipé de cette bague.

Ce joint et la bague sont très flexibles et très déformables. Leur dureté est de l'ordre de 5 shores ou même légèrement moins, de manière à assurer une très bonne étanchéité des câbles en place dont les diamètres peuvent présenter d'un câble à l'autre un rapport de 3, dans la gamme de câbles pouvant être reçus dans l'accès. Cette faible dureté évite par ailleurs un excès de contraintes sur les parties périphériques de l'accès.

Les nervures prévues sur la périphérie des passages 11A du joint favorisent une déformation du joint autour des câbles et de l'éventuel bouchon en place. Elles diminuent aussi l'effort nécessaire pour comprimer de manière satisfaisante le joint.

Ce joint 11 présente deux évidements circulaires 11E réalisés sur l'une de ses faces et une partie importante de son épaisseur. Ces deux évidements 11E sont prévus pour les parties terminales de l'un et l'autre des deux joints de boîtier en place, qui viennent se loger dans ces évidements, de sorte qu'elles sont encastrées dans le joint 11 déformé et comprimé autour d'elles. Ces deux évidements 11E peuvent en variante être débouchants sur les deux faces du joint 11.

Les joints de boîtier, qui sont prévus déformables mais de dureté relativement plus élevée que celle du joint 11, font que le joint 11 se déforme de manière importante autour de la partie terminale de chacun se trouvant encastrée dans ce joint 11. On note, à cet égard que l'actionnement en mode "poussé" du disque de compression pour comprimer ce joint déformable 11 favorise le parfait encastrement de la partie terminale du joint de boîtier, puisque le joint 11 est lui-même "poussé" sur cette partie terminale du joint de boîtier.

Ce dispositif d'étanchéité 10 est aisé et rapide à mettre en place dans l'accès et sur les câbles reçus dans celui-ci, ainsi que les parties terminales des deux joints de boîtier en place dans les rainures du corps.

Il est pareillement aisé à démonter et reste réutilisable.

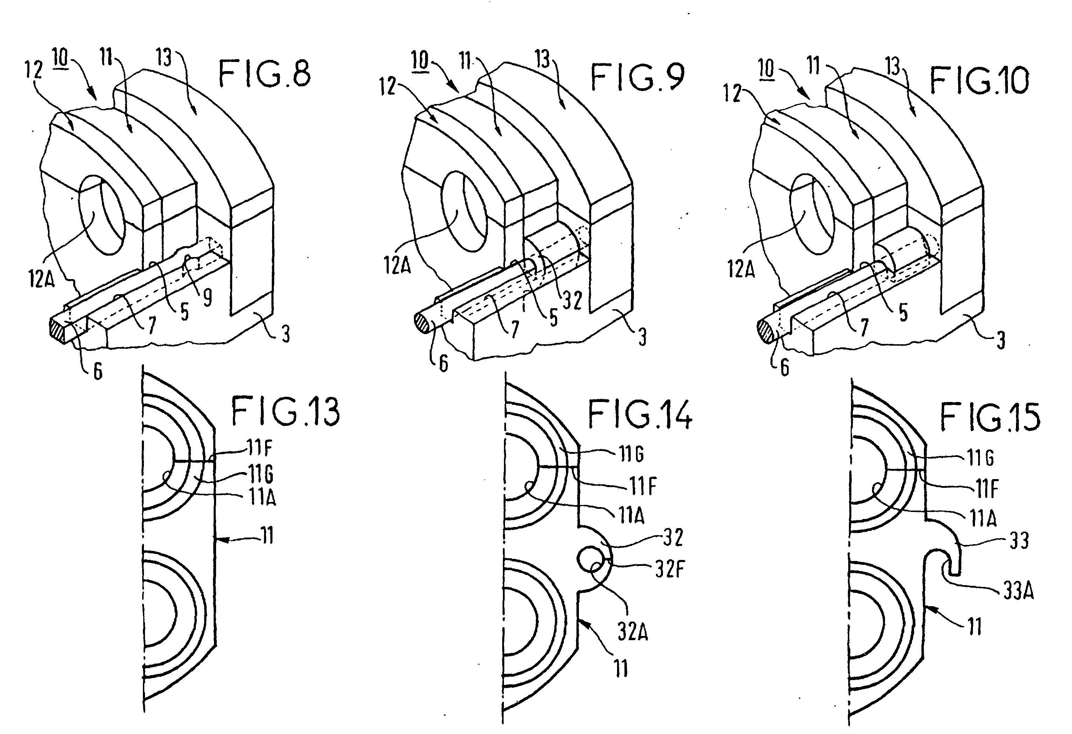

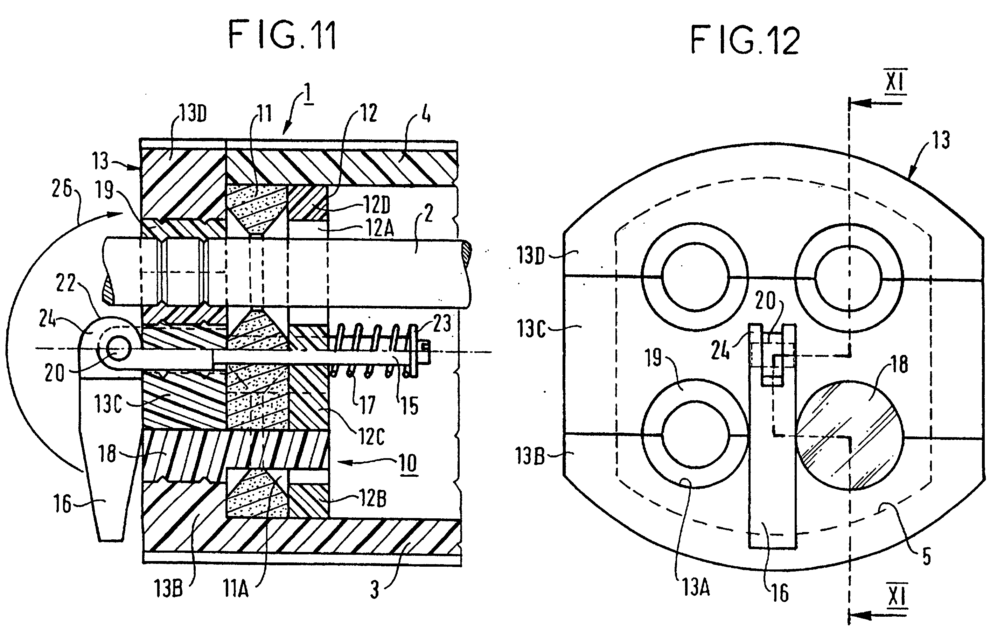

Les figures 8 à 10 montrent des variantes de réalisation données par rapport aux figures 1 et 1A, il leur correspond la variante de réalisation illustrée dans les figures 11 et 12 du dispositif d'étanchéité des câbles et les variantes de réalisation selon les figures 13 à 15 pour le joint 11 du dispositif 10 d'étanchéité des câbles.

Dans ces figures 8 à 15 les mêmes références sont utilisées pour désigner les mêmes éléments que dans les figures 1 à 3, les différences par rapport à ces figures 1 à 3 étant seules précisées.

Dans les figures 8 à 10, l'accès 5 présente intérieurement deux méplats latéraux définis chacun par moitié sur le corps et sur le couvercle, respectivement. Il présente sa partie terminale située vers l'extérieur qui est partiellement tronquée. Le joint 11 est disposé entre le disque de compression 12 et la première butée fixe 13, cette première butée étant la seule butée dans l'accès. Le disque de compression 12 et le joint 11 ont leurs parties latérales tronquées formant deux méplats opposés, qui sont reçus contre ceux correspondants de chaque accès. Dans ses figures 8 à 10 la portion terminale de chaque rainure 7 est ouverte en long dans l'accès 5, par son bord latéral intérieur qui est tronqué sur cette portion terminale dans l'accès.

Dans la figure 8, la rainure 7 est munie d'un bossage 9 saillant intérieurement et prévu sur le bord extérieur de sa portion terminale. Ce bossage est centré sur le méplat du joint 11. Il déforme le joint 6 de boîtier en place dans la rainure, qui présente en correspondance un bossage rentrant dans le méplat du joint 11 et centré sur la largeur de ce méplat. Ce joint 6 est de préférence de section sensiblement carrée pour un meilleur ancrage dans le joint 11 et jouant le rôle d'un système de débrayage lors de gros câbles traversant ce joint.

Ce joint 11 appartenant au dispositif d'étanchéité 10 du câble selon la figure 8 est celui illustré dans la figure 13. En variante, il peut présenter un évidement centré sur la largeur de chacun de ses méplats opposés et affecté à la réception du bossage formé sur le joint 6 de boîtier.

Dans la figure 9, la portion terminale de la rainure 7 est ouverte en long dans l'accès, mais est sans bossage sur son bord extérieur. Le joint 11 de ce dispositif 10 est celui illustré dans la figure 14. Il est muni d'une oreille 32 prévue sur la largeur de chacun de ses méplats et saillante sur celui-ci.

Cette oreille est percée d'un alésage 32A parallèle à la rainure et la prolongeant axialement. Elle est reçue dans la portion terminale de la rainure. Elle présente une fente 32F d'ouverture en long de son perçage et reçoit la partie terminale du joint 6 en place dans la rainure.

Dans la figure 10, la portion terminale de la rainure est également ouverte en long dans l'accès et est sans bossage sur son bord extérieur. Le joint 11 de ce dispositif d'étanchéité de câbles est celui illustré dans la figure 15. Il est muni d'une patte 33 prévue sur la largeur de chacun de ses méplats et saillante sur celui-ci, avec un passage semicylindrique 33A parallèle à la rainure et la prolongeant axialement. Elle est reçue dans la portion terminale de la rainure et reçoit la portion terminale du joint 6 de boîtier en place dans sa rainure.

De préférence, dans le dispositif 10 d'étanchéité de câbles selon l'une quelconque de ces figures 8 à 10, la tige coulissante 15 est actionnée en mode "tiré" vers l'extérieur de l'accès et du boîtier par le levier 16 alors actionné, ainsi que décrit en regard des figures 11 et 12.

Le disque de compression 12 est disposé intérieurement dans l'accès par rapport au joint 11 et est terminal dans cet accès. La seule première butée fixe 13, qui est utilisée, joue le rôle de butée pour le joint 11 et de butée pour le levier.

La première partie terminale de la tige 15, saillante sur l'extérieur de l'accès, est directement couplée à la partie terminale du levier 16, par l'axe d'articulation 20.

La section de cette première partie terminale de la tige est rectangulaire à cet effet et forme un épaulement sur la tige par ailleurs de section circulaire.

La partie terminale du levier 16 est échancrée pour définir deux pattes 24 entre lesquelles est reçue la première partie terminale de la tige ainsi couplée au levier par l'axe 20. La partie périphérique de ces deux pattes 24 définit la came 22, reçue en appui contre la première butée fixe 13 ou plus précisément la partie centrale 13C de celle-ci.

La deuxième partie terminale de la tige 15 est saillante au-delà du disque de compression à l'intérieur du boîtier et porte le ressort 17 monté autour d'elle. Ce ressort 17 est bloqué entre la rondelle terminale 23 et le disque de compression, en étant faiblement comprimé quand le levier est en position de repos illustrée dans la figure 4.

Lors de l'actionnement du levier autour de l'axe 20 selon la flèche 26, la came 22 est entraînée, contre la première butée 13 et fait que la tige coulissante 15 est tirée vers l'extérieur, à l'encontre de l'action du ressort se comprimant fortement. Le ressort comprimé provoque le déplacement du disque de compression vers la première butée fixe 13, en comprimant le joint 11 et jouant le rôle d'un système de débrayage lors de gros câbles traversant ce joint.

La présente invention a été décrite en regard des exemples de réalisation illustrés, mais il est évident que des variantes de réalisation de l'un ou l'autre des moyens particuliers décrits ci-avant peuvent être adaptés sans pour autant sortir du cadre de l'invention. C'est ainsi notamment pour le moyen d'actionnement du disque de compression du joint d'étanchéité des câbles, autour de ces câbles, dans l'accès et sur la portion terminale de segments de joint d'étanchéité de boîtier. En particulier, en regard des figures 1 à 3, ce moyen d'actionnement peut être un poussoir amovible qui est intercalé à travers le couvercle entre le disque de compression et la butée fixe située du côté extérieur de l'accès, au lieu du levier et de la tige coulissante associée montrés dans ces figures.

Le boîtier peut aussi comporter plusieurs accès de câbles à l'une et/ou l'autre de ses extrémités. Dans ces conditions, il est muni d'un segment de joint de boîtier qui est prévu entre deux accès situés à la même extrémité et qui présente ses portions terminales encastrées dans les joints d'étanchéité de câbles dans ces deux accès.

## Revendications

1. Un boîtier étanche de raccordement de câbles comportant un corps (3), un couvercle (4) de fermeture du corps, des accès de câbles entre le corps et le couvercle, un premier joint (11) flexible et déformable d'étanchéité des câbles dans chaque accès, une rainure (7) prévue sur les bords périphériques du corps et du couvercle et divisée en tronçons successifs par lesdits accès, et un deuxième joint (6) flexible et déformable d'étanchéité de boîtier, monté dans ladite rainure (7), ledit premier joint (11) présentant une dureté inférieure à celle dudit deuxième joint (6),
**caractérisé en ce que**
- ledit deuxième joint est formé en correspondance de segments indépendants chacun reçu dans l'un des tronçons de la rainure et saillant sur ses bords latéraux et chaque segment dudit deuxième joint (6) d'étanchéité de boîter a une partie terminale encastrée dans le premier joint (11) d'étanchéité des câbles en place dans l'accès (5) à ce niveau, pour être comprimé sur la partie terminale encastrée de ce segment en même temps que dans l'accès et sur les câbles et réaliser une continuité d'étanchéité avec cette partie terminale encastrée de ce segment,
- chaque tronçon de ladite rainure (7) présente une portion terminale parallèle à une direction axiale de l'accès (5) à ce niveau et aux câbles (2) dans cet accès et est ouverte directement dans l'accès et
- les portions terminales de chaque tronçon de ladite rainure (7) ont leur extrémités débouchant dans les deux accès de part et d'autre de ce tronçon, et le segment dudit deuxième joint (6) dans ce tronçon est saillant sur les extrémités du tronçon dans ces deux accès.

2. Boîtier selon la revendication 1, **caractérisé en ce que** les portions terminales de chaque tronçon de ladite rainure (7) sont ouvertes en long dans les deux accès de part et d'autre de ce tronçon et présentent chacune un bossage (9) saillant dans la rainure (7) et vers l'accès à ce niveau.

3. Boîtier selon l'une des revendications 1 et 2, **caractérisé en ce que** ledit premier joint (11) d'étanchéité des câbles dans chaque accès présente une forme de galette, ayant des dimensions périphériques adaptées aux dimensions périphériques intérieures dudit accès et une épaisseur réduite par rapport à la dimension axiale dudit accès et présentant des passages individuels (11A) pour un nombre maximal limité de câbles, est associé à des moyens de compression (12-16) et présente un évidement (11E, 32A, 33A) réalisé sur au moins une face de ce premier joint tournée vers l'intérieur dudit boîtier et à travers au moins une partie de son épaisseur, pour l'encastrement de l'une des parties terminales de l'un des segments dudit deuxième joint (6).

4. Boîtier selon la revendication 3, **caractérisé en ce que** ledit évidement est traversant et constitue un alésage (32A) dans une oreille (32) réalisée sur l'épaisseur dudit premier joint (11) et saillante sur celui-ci.

5. Boîtier selon la revendication 4, **caractérisé en ce que** ladite oreille présente une fente (32F) d'ouverture en long dudit alésage.

6. Boîtier selon la revendication 3, **caractérisé en ce que** ledit évidement est traversant et ouvert en long et définit par une patte arquée (33) prévue sur l'épaisseur dudit joint et saillante sur celui-ci.

7. Boîtier selon l'une des revendications 3 à 6, **caractérisé en ce que** ledit premier joint (11) présente des fentes (11F) réalisées entre chacun de ses passages (11A) et sa périphérie.

8. Boîtier selon l'une des revendications 3 à 6, **caractérisé en ce que** ledit premier joint (11) est formé en plusieurs parties assemblables et **en ce que** les passages (11A) de câbles dudit premier joint sont prévus sur des bords d'assemblage des parties dudit premier joint.

9. Boîtier selon l'une des revendications 3 et 8, **caractérisé en ce qu'**il comporte des bagues (30) associées audit premier joint (11) de câbles et montées sélectivement amovibles dans ses passages (11A), pour une éventuelle adaptation de chaque passage à l'un des câbles reçu dans ce passage et ayant un diamètre inférieur à -celui de ce passage.

10. Boîtier selon la revendication 9, **caractérisé en ce que** lesdites bagues (30) présentent une fente (30F) d'ouverture en long de chaque bague.

11. Boîtier selon la revendication 3, **caractérisé en ce que** ledit deuxième joint (6) est de section circulaire ou sensiblement carrée.

12. Boîtier selon la revendication 11, **caractérisé en ce que** ledit deuxième joint est de section creuse.

13. Boîtier selon l'une des revendications 1 et 11, **caractérisé en ce que** ledit premier joint (11) d'étanchéité des câbles a une dureté choisie au plus de l'ordre de 5 shores et ledit deuxième joint (6) d'étanchéité de boîtier une dureté comprise entre 20 et 40 shores.

14. Boîtier selon la revendication 3, **caractérisé en ce que** lesdits moyens de compression comportent un disque de compression (12) et au moins une butée fixe (13, 14), montés transversalement dans ledit accès et munis de passages pour un nombre maximal limité de câbles dans chaque passage, une tige axiale (15) dans ledit accès, coulissante à travers chaque butée et couplée mécaniquement audit disque de compression, et un levier (16) d'actionnement en translation dudit disque de compression selon la direction axiale de l'accès, monté sur l'extérieur du boîtier et couplé à ladite tige.

15. Boîtier selon la revendication 14, **caractérisé en ce que** le disque de compression (12) et chaque butée fixe (13, 14) sont en plusieurs parties assemblables en présentant entre elles lesdits passages.

16. Boîtier selon la revendication 10, **caractérisé en ce qu'**il comporte la ou l'une des butées fixes montée dans celle des parties terminales de l'accès débouchant sur l'extérieur du boîtier, et des câles d'adaptation (19) associées à cette butée pour une éventuelle adaptation de chacun de ses passages au diamètre du câble reçu dans le passage.

## Patentansprüche

1. Versiegeltes Kabelanschlussgehäuse, umfassend ein Hauptstück (3), einen Deckel (4) zum Verschließen des Hauptstücks, Kabelzugänge zwischen dem Hauptstück und dem Deckel, eine erste biegsame und verformbare Dichtung (11) zur Abdichtung der Kabel in jedem Zugang, eine Nut (7), die auf den Umfangsrändern des Hauptstücks und des Deckels bereitgestellt wird und von den Zugängen in aufeinander folgende Teilstücke unterteilt ist, und eine zweite biegsame und verformbare Dichtung (6) zur Abdichtung des Gehäuses, die in der Nut (7) angebracht ist, wobei die erste Dichtung (11) eine geringere Härte als die der zweiten Dichtung (6) aufweist,
**dadurch gekennzeichnet, dass**
- die zweite Dichtung in Deckung mit unabhängigen Segmenten gebildet ist, die jeweils in einem der Teilstücke der Nut aufgenommen werden und auf ihren Seitenrändern hervorstehen, und jedes Segment der zweiten Dichtung (6) zur Abdichtung des Gehäuses weist einen Endbereich auf, der in der ersten Dichtung (11) zur Abdichtung der Kabel, die in dem Zugang (5) auf dieser Ebene angeordnet sind, versenkt ist, um auf dem versenkten Endbereich dieses Segments und gleichzeitig in dem Zugang und auf den Kabeln zusammengedrückt zu werden und eine Abdichtungskontinuität mit diesem in diesem Segment versenkten Endbereich auszuführen,
- jedes Teilstück der Nut (7) einen Endbereich aufweist, der zu einer Axialrichtung des Zugangs (5) auf dieser Ebene und zu den Kabeln (2) in diesem Zugang parallel ist und unmittelbar auf diesen Zugang offen ist, und
- die Endbereiche jedes Teilstücks der Nut (7) Enden aufweisen, die in die beiden Zugänge auf beiden Seiten dieses Teilstücks münden, und das Segment der zweiten Dichtung (6) in diesem Teilstück an den Enden des Teilstücks in diesen beiden Zugängen hervorstehend ist.

2. Gehäuse gemäß Anspruch 1, **dadurch gekennzeichnet, dass** die Endbereiche jedes Teilstücks der Nut (7) der Länge nach in den beiden Zugängen auf beiden Seiten dieses Teilstücks offen sind und jeweils einen Buckel (9) aufweisen, der in die Nut (7) und auf den Zugang auf dieser Ebene hin hervorsteht.

3. Gehäuse gemäß einem der Ansprüche 1 und 2, **dadurch gekennzeichnet, dass** die erste Kabeldichtung (11) in jedem Zugang scheibenförmig ist, wobei sie Umfangsabmessungen, die den inneren Umfangsabmessungen des Zugangs entsprechen, und eine im Verhältnis zu der Axialabmessung des Zugangs geringe Dicke und einzelne Durchführungen (11A) für eine begrenzte Höchstanzahl an Kabeln aufweist, mit Druckmitteln (12-16) verknüpft ist und eine Aussparung (11E, 32A, 33A) aufweist, die auf mindestens einer zum Innern des Gehäuses hin gewandten Seite dieser ersten Dichtung und durch mindestens einen Teil ihrer Dicke ausgeführt ist, um einen der Endteile eines der Segmente der zweiten Dichtung (6) zu versenken.

4. Gehäuse gemäß Anspruch 3, **dadurch gekennzeichnet, dass** die Aussparung durchgehend ist und eine Bohrung (32A) in einer Öse (32) bildet, die auf der Dicke der ersten Dichtung (11) ausgeführt und darauf hervorstehend ist.

5. Gehäuse gemäß Anspruch 4, **dadurch gekennzeichnet, dass** die Öse einen Öffnungsschlitz (32F) in der Länge der Bohrung aufweist.

6. Gehäuse gemäß Anspruch 3, **dadurch gekennzeichnet, dass** die Aussparung durchgehend und der Länge nach offen und durch eine gebogene Lasche (33) definiert ist, die auf der Dicke der Dichtung bereitgestellt wird und darauf hervorstehend ist.

7. Gehäuse gemäß einem der Ansprüche 3 bis 6, **dadurch gekennzeichnet, dass** die erste Dichtung (11) Schlitze (11F) aufweist, die zwischen jeder ihrer Durchführungen (11A) und ihrem Umfang ausgeführt sind.

8. Gehäuse gemäß einem der Ansprüche 3 bis 6, **dadurch gekennzeichnet, dass** die erste Dichtung (11) aus mehreren zusammenbaubaren Teilen gebildet ist, und dass die Kabeldurchführungen (11A) der ersten Dichtung auf Zusammenbaurändern der Teile der ersten Dichtung bereitgestellt werden.

9. Gehäuse gemäß einem der Ansprüche 3 bis 8, **dadurch gekennzeichnet, dass** es Ringe (30) umfasst, die mit der ersten Kabeldichtung (11) verknüpft sind und selektiv abnehmbar in seinen Durchführungen (11A) eingebaut sind, um gegebenenfalls jede Durchführung an eines der Kabel anzupassen, das in dieser Durchführung aufgenommen wird und einen Durchmesser aufweist, der kleiner ist der dieser Durchführung.

10. Gehäuse gemäß Anspruch 9, **dadurch gekennzeichnet, dass** die Ringe (30) einen Öffnungsschlitz (30F) in der Länge jedes Ringes aufweisen.

11. Gehäuse gemäß Anspruch 3, **dadurch gekennzeichnet, dass** die zweite Dichtung (6) im Querschnitt kreisförmig oder im Wesentlichen quadratisch ist.

12. Gehäuse gemäß Anspruch 11, **dadurch gekennzeichnet, dass** die zweite Dichtung im Querschnitt hohl ist.

13. Gehäuse gemäß einem der Ansprüche 1 und 11, **dadurch gekennzeichnet, dass** die erste Kabeldichtung (11) eine Härte aufweist, die höchstens als ungefähr 5 Shore gewählt wird, und die zweite Gehäusedichtung (6) eine Härte von zwischen 20 und 40 Shore aufweist.

14. Gehäuse gemäß Anspruch 3, **dadurch gekennzeichnet, dass** die Druckmittel eine Druckscheibe (12) und mindestens einen festen Anschlag (13, 14) umfassen, die quer in dem Zugang angebracht sind und mit Durchführungen versehen sind für eine begrenzte Höchstanzahl an Kabeln in jeder Durchführung, einen Achsenstab (15) in dem Zugang, der durch jeden Anschlag gleitend und mechanisch mit der Druckscheibe gekoppelt ist, und einen Translationsbetätigungshebel (16) der Druckscheibe in der Axialrichtung des Zugangs, der an der Außenseite des Gehäuses angebracht und mit dem Stab gekoppelt ist.

15. Gehäuse gemäß Anspruch 14, **dadurch gekennzeichnet, dass** die Druckscheibe (12) und jeder feste Anschlag (13, 14) aus mehreren zusammenbaubaren Teilen bestehen, indem sie die Durchführungen zwischen einander aufweisen.

16. Gehäuse gemäß Anspruch 10, **dadurch gekennzeichnet, dass** es die oder einen der festen Anschläge, die in demjenigen Teil der Endteile des Zugangs angebracht sind, der auf die Außenseite des Gehäuses mündet, und Anpassungsbeilagscheiben (19), die zu diesem Anschlag gehören, um eventuell jede seiner Durchführungen dem Durchmesser des in der Durchführung aufgenommenen Kabels anzupassen, umfasst.

## Claims

1. Sealed cable connecting enclosure, comprising a body (3), a cover (4) for closing the body, cables entries between body and cover, a first flexible and deformable seal (11) for sealing cables in each entry, a groove (7) provided on the peripheral edges of the body and the cover and divided into successive sections by said entries, and a second flexible and deformable seal (6) for sealing the enclosure, which is installed in said groove (7), said first seal (11) having a hardness which is less than that of said second seal (6),
**characterized in that**
- said second seal is formed in register with independent segments, which are each received in one of the sections of the groove and protruding on its side edges, and each segment of said second seal (6) for sealing the enclosure has an end portion embedded in the first seal (11) for sealing the cables arranged in the entry (5) at this level in order to be compressed on the embedded end portion of this segment and at the same time in the entry and on the cables, and achieve sealing continuity with this end portion embedded in this segment,
- each section of said groove (7) has an end portion which is parallel to an axial direction of the entry (5) at this level and to the cables (2) in this entry and is directly open into the entry, and
- the end portions of each section of said groove (7) have their ends leading into both entries on either side of this section, and the segment of said second seal (6) in this section is protruding at the ends of the section in these two entries.

2. Enclosure according to claim 1, **characterized in that** the end portions of each section of said groove (7) are open lengthwise in both entries on either side of this section and each have a boss (9) protruding into the groove (7) and towards the entry at this level.

3. Enclosure according to any of claims 1 and 2, **characterized in that** said first cable seal (11) in each entry is plate-shaped with peripheral dimensions adapted to the inner peripheral dimensions of said entry and reduced thickness in relation to the axial dimension of said entry and having single bushings (11A) for a limited maximum number of cables, is associated with compression means (12-16) and has a cutout (11E, 32A, 33A) made on at least one side of this first seal directed inwards of said enclosure and through at least part of its thickness for embedding one of the end parts of one of the segments of said second seal (6).

4. Enclosure according to claim 3, **characterized in that** said cutout is a through cutout and is a bore (32A) in a lug (32) made on the thickness of said first seal (11) and protruding thereon.

5. Enclosure according to claim 4, **characterized in that** said lug has an opening slot (32F) lengthwise of said bore.

6. Enclosure according to claim 3, **characterized in that** said cutout is a through cutout and open lengthwise and defined by an arcuate tab (33) provided on the thickness of said seal and protruding thereon.

7. Enclosure according to any of claims 3 to 6, **characterized in that** said first seal (11) has slots (11F) made between each of the bushings (11A) and periphery thereof.

8. Enclosure according to any of claims 3 to 6, **characterized in that** said first seal (11) is composed of several parts that can be assembled and **in that** the cable bushings (11A) of said first seal are provided on assembly edges of the parts of said first seal.

9. Enclosure according to any of claims 3 to 8, characterized it comprises rings (30) associated with said first cable seal (11) and installed so as to be selectively removable inside the bushings (11A) thereof, for possibly adapting each bushing to one of the cables received in this bushing and having a diameter smaller than that of this bushing.

10. Enclosure according to claim 9, **characterized in that** said rings (30) have an opening slot (30F) lengthwise of each ring.

11. Enclosure according to claim 3, **characterized in that** said second seal (6) is circular or substantially square in cross-section.

12. Enclosure according to claim 11, **characterized in that** said second seal is hollow in cross-section.

13. Enclosure according to any of claims 1 and 11, **characterized in that** said first cable seal (11) has a hardness chosen to be at most of roughly 5 shore and said second enclosure seal (6) has a hardness of between 20 and 40 shore.

14. Enclosure according to claim 3, **characterized in that** said compression means comprises a compression disc (12) and at least one fixed stop (13, 14) installed transversely in said entry and provided with bushings for a limited maximum number of cables in each bushing, an axial rod (15) in said entry, sliding through each stop and mechanically coupled with said compression disc, and a translatory actuating lever (16) of said compression disc according to the axial direction of the entry, installed on the outside of the enclosure and coupled with said rod.

15. Enclosure according to claim 14, **characterized in that** the compression disc (12) and each fixed stop (13, 14) are composed of several parts that can be assembled in having said bushings therebetween.

16. Enclosure according to claim 10, **characterized in that** it comprises the or any of the fixed stops installed **in that** one of the end parts of the entry leading to the outside of the enclosure, and adapting shims (19) associated with this stop for possibly adapting each of the bushings thereof to the diameter of the cable received in the bushing.
